# EUROPÄISCHE PATENTSCHRIFT

(11) **EP 1 907 230 B1**
(45) Veröffentlichungstag und Bekanntmachung des Hinweises auf die Patenterteilung: **11.12.2013**
(21) Anmeldenummer: 06775715.3
(22) Anmeldetag: 19.07.2006
(51) Int. Cl.: B60J 7/185, B60J 7/20

(54) **TRÄGERVORRICHTUNG EINES VERDECKKASTENDECKELS EINES CABRIOLETS**
SUPPORTING DEVICE FOR A SOFT TOP COMPARTMENT COVER OF A CONVERTIBLE
DISPOSITIF DE SUPPORT POUR UN COUVERCLE DE LOGEMENT DE CAPOTE D'UNE VOITURE DECAPOTABLE

(30) Priorität: 19.07.2005 DE 102005034222
(43) Veröffentlichungstag der Anmeldung: 09.04.2008
(73) Patentinhaber: Webasto SE, 82131 Stockdorf (DE)
(72) Erfinder: WEGENER, Fritz, 82205 Gilching (DE)
(74) Vertreter: Konnerth, Dieter Hans
(86) Internationale Anmeldenummer: PCT/DE2006/001258
(87) Internationale Veröffentlichungsnummer: WO 2007/009445

(56) Entgegenhaltungen:
- WO-A-03/080377
- DE-A1- 10 107 079
- DE-C1- 19 756 062
- FR-A1- 2 856 958
- GB-A- 2 300 671

## Beschreibung

Die Erfindung betrifft eine Trägervorrichtung eines Verdeckkastendeckels eines Cabriolets, die an der Karosserie bewegbar gelagert und mittels einer Riegeleinrichtung an der Karosserie festlegbar ist.

Aus der DE 101 07 079 A1 oder aus der GB 2360671 A ist ein Cabriolet bekannt geworden, das in seinem Heckbereich eine Trägervorrichtung aufweist, an der vorderseitig ein Verdeckkastendeckel fest angebracht ist und rückseitig eine Hecklappe mittels einer Lagereinrichtung bewegbar gelagert ist. Die Trägervorrichtung ist mittels einer Viergelenkeinrichtung an der Karosserie zwischen einer Schließstellung und einer nach hinten geschwenkten Offenstellung verstellbar und mittels einer Schloßeinrichtung in ihrer Schließstellung an der Karosserie verriegelbar. Die Schloßeinrichtung enthält beidseits jeweils zwei in Längsrichtung voneinander beabstandete Schlösser, die an der Trägervorrichtung angeordnet sind und mit einem an der Trägervorrichtung angeordneten gemeinsamen Antrieb verbunden sind. Gemäß einer alternativen Gestaltung ist das vordere Schloß an der Karosserie und das hintere Schloß an der Trägervorrichtung angeordnet und jedem Schloß ist ein eigener Antrieb zugeordnet. Die Heckklappe ist mittels eines Heckklappenschlosses verriegelbar, das im Bereich der Lagereinrichtung der Heckklappe angeordnet ist.

Der Erfindung liegt die Aufgabe zugrunde, eine eingangs genannte Trägervorrichtung mit einer Riegeleinrichtung derart weiterzubilden, daß ihre Funktionalität im Hinblick auf die Riegeleinrichtung verbessert ist.

Die Aufgabe wird bei der eingangs genannten Trägervorrichtung erfindungsgemäß dadurch gelöst, daß die Riegeleinrichtung zwei zur gemeinsamen Betätigung miteinander verbundene und an der Trägervorrichtung angeordnete Schloßeinheiten aufweist, wobei die erste Schloßeinheit zum Festlegen der Trägervorrichtung an der Karosserie und die zweite Schloßeinheit zum Festlegen des an der Trägervorrichtung bewegbar gelagerten Verdeckkastendeckels an der Trägervorrichtung vorgesehen ist. Damit kann die Betätigung der beiden miteinander verbundenen Schloßeinheiten für die Trägervorrichtung wie auch für den Verdeckkastendeckel mittels eines gemeinsamen Antriebs in kostengünstiger und betriebssicherer Weise vorgenommen werden, wobei der Antrieb z. B. an der Trägervorrichtung angeordnet sein kann oder von einer Antriebseinrichtung der Trägervorrichtung abgeleitet sein kann.

Die Trägervorrichtung bzw. der Rahmen ist für Verdeckkastendeckel von Cabriolets mit einem umwandelbaren Hardtop- oder Softtopdach vorgesehen, kann jedoch auch bei anderen Fahrzeugen eingesetzt werden.

Vorteilhafte Ausgestaltungen der Erfindung sind in den Unteransprüchen angegeben.

Eine bevorzugte Funktionsweise ergibt sich dann, wenn in einer Schließstellung der Trägervorrichtung die erste Schloßeinheit die Trägervorrichtung an der Karosserie verriegelt und die zweite Schloßeinheit den Verdeckkastendeckel entriegelt. Bei dieser Gestaltung kann der Verdeckkastendeckel um seine vordere Lagerachse gegenüber der festgelegten Trägervorrichtung in der Funktion einer Kofferraumklappe aufgeschwenkt werden.

Zweckmäßigerweise ist zum vorderseitigen Hochschwenken der Trägervorrichtung die erste Schloßeinheit von der Karosserie entriegelt und die zweite Schloßeinheit hält den Verdeckkastendeckel an der Trägervorrichtung verriegelt. In diesem Fall ist der Verdeckkastendeckel an einem Aufschwingen gegenüber der Trägervorrichtung gehindert. Das Aufschwingen könnte insbesondere durch eine Gasdruckfeder bewirkt werden, die zur Unterstützung des Öffnens des als Kofferraumklappe genutzten Verdeckkastendeckels vorgesehen ist und die beim vorderseitigen Hochschwenken des Verdeckkastendeckels die abnehmende relevante Gewichtskraftkomponente des Verdeckkastendeckels übersteigen könnte.

Vorzugsweise koppelt eine Kopplungseinrichtung die beiden Schloßeinheiten miteinander, wobei insbesondere ein Verbindungsgestänge vorgesehen ist, aber auch ein Zug-Druck-Kabel oder dergleichen verwendet werden kann.

Ein besonderer Vorteil der Erfindung ergibt sich dann, wenn die Kopplungseinrichtung bzw. das Verbindungsgestänge an der Trägervorrichtung angeordnet ist. Damit wird vermieden, daß die die beiden Schloßeinheiten verbindenden Verbindungsbauteile mit anderen Bauteilen wie z. B. abzulegenden Dachteilen kollidieren können und es wird daher auf ein Verbindungsmittel verzichtet, das ansonsten zwischen der vorderen Schloßeinheit und einer karosserieseitigen Betätigungseinheit verlaufen müßte.

Aufgrund der Kopplung der beiden Schloßeinheiten ist es ausreichend, wenn eine der beiden Schloßeinheiten durch eine Betätigungseinrichtung bewegungsgesteuert ist. Dabei kann eine der beiden Schloßeinheiten durch eine Kinematik bewegungsgesteuert sein, die mit einer Antriebseinrichtung der Trägervorrichtung gekoppelt ist. Jedoch kann auch ein eigener gesteuerter Antrieb vorgesehen sein.

Zum Ausführen der Riegelbewegung oder für deren Unterstützung kann eine Vorspanneinrichtung vorgesehen sein, die an zumindest einer der beiden Schloßeinheiten angreift und z. B. das vordere Schließteil in Offenstellung und den hinteren Schloßhaken in Schließstellung vorspannt. Durch die Vorspanneinrichtung wird in einfacher Weise eine jeweilige Endstellung der Schloßeinheiten aufrechterhalten.

Bevorzugt ist die Vorspanneinrichtung in Schließstellung des vorderen Schließteils kraftneutral, so daß keine Reaktionskraft in die beiden kombinierten Schloßeinheiten eingeleitet wird.

Zweckmäßigerweise enthält die Vorspanneinrichtung eine Feder und insbesondere eine Zugfeder, die das Schließteil der vorderen Schloßeinheit mit der Trägervorrichtung derart verbindet, daß ihre Kraftwirklinie bei geschlossenem Schließteil zu diesem in einer Totpunktstellung ist.

Zweckmäßigerweise ist eine weitere Riegeleinheit zum Verriegeln der Trägervorrichtung an der Karosserie vorgesehen, so daß eine feste Verriegelung erzielt wird und die Trägervorrichtung die Karosserie im Bereich des Verdeckablageraumes versteifen kann. Die weitere Riegeleinheit ist z. B. jeweils am seitlichen Hinterrandbereich der Trägervorrichtung angeordnet und kann in Schließrichtung vorgespannt sein, beispielsweise durch eine Feder, die an einem Übersetzungshebel, der zwischen der Antriebseinheit und der Riegeleinheit zwischengeschaltet ist, oder einem weiteren Bauteil der Riegeleinheit, insbesondere einer Verbindungsstange, angreift.

Eine besonders bevorzugte Gestaltung sieht vor, daß die Riegeleinheit die Betätigungseinrichtung der Schloßeinheiten oder einen Teil davon bildet. Die Riegeleinheit ist zweckmäßigerweise von der Antriebseinrichtung der Trägervorrichtung betätigt, so daß ein zusätzlicher Antrieb für die Schloßeinheiten nicht erforderlich ist.

Zweckmäßigerweise ist die Betätigungseinrichtung der Schloßeinheiten an die Schloßeinheiten an- und abkoppelbar. Damit kann die Kopplung auf bestimmte Stellungen der Trägervorrichtung in ihrem Bewegungsablauf beschränkt sein. Insbesondere wird die Kopplung aufgehoben, sobald sich die Trägervorrichtung aus ihrer Schließstellung an der Karosserie nach oben bzw. hinten bewegen bzw. verschwenken soll. Hierdurch wird der erfindungsgemäße Vorteil realisiert, daß kein aufwendiges Kopplungsmittel erforderlich ist, das der Bewegung der Trägervorrichtung folgen müsste und die andere Bauteile behindern könnte oder mit diesen kollidieren könnte. Das An- und Abkoppeln erfolgt beispielsweise mittels zweier schwenkbarer Koppelteile, wobei das eine Koppelteil mittels eines Anschlags oder einer Ausnehmung mit einem Anschlag oder einem Bolzen des anderen Koppelteils in Eingriff gebracht werden kann.

Für den Bewegungsablauf ist es zweckmäßig, wenn eine Sperreinrichtung vorgesehen ist, die eine Rückbewegung der Antriebseinrichtung der Trägervorrichtung verhindert, wenn diese in Richtung ihrer zweiten offenen Endstellung bewegt ist. Die Sperreinrichtung kann mit der Lagereinrichtung der Trägervorrichtung zusammenwirken und insbesondere von dieser aktiviert werden. Eine einfache Gestaltung sieht vor, daß die Sperreinrichtung ein an der weiteren Riegeleinheit und insbesondere an einem Schloßhaken der Riegeleinheit angeordnetes Sperrglied aufweist, das mit einem an der Lagereinrichtung der Trägervorrichtung angeordneten Blockierteil in Sperreingriff bringbar ist.

Die Lagereinrichtung der Trägervorrichtung enthält bevorzugt einen Hauptlenker, insbesondere in Viergelenkanordnung, der sie fahrzeugseitig abstützt.

Die Trägervorrichtung ist bevorzugt eine rahmenartige Tragstruktur oder ein Rahmen, der über eine Gelenkeinrichtung, insbesondere ein Vier- oder Mehrgelenk, an der Karosserie bewegbar abgestützt ist und an dem ein Verdeckkastendeckel um seinen Vorderrand schwenkbar gelagert ist.

Die Antriebseinheit der Trägervorrichtung ist bevorzugt eine lineare Verstelleinheit und insbesondere eine hydraulische Kolben-Zylinder-Einheit.

Nachfolgend wird die Trägervorrichtung anhand eines Ausführungsbeispiels unter Bezugnahme auf die Zeichnung näher erläutert. Es zeigt:
- Fig. 1: in einer seitlichen Draufsicht eine Trägervorrichtung eines Verdeckkastendeckels eines Cabriolets, die in Schließstellung angeordnet ist und mittels einer Riegeleinrichtung an der Karosserie verriegelt ist;
- Fig. 2: in einer perspektivischen Draufsicht in vergrößerter Darstellung eine geöffnete Schloßeinheit der Riegeleinrichtung für den Verdeckkastendeckel und eine zusätzliche hintere Schloßeinheit der Trägervorrichtung in Schließstellung;
- Fig. 3: in einer seitlichen Draufsicht in vergrößerter Darstellung die erste vordere Schloßeinheit in ihrer Schließstellung;
- Fig. 4: in einer perspektivischen Draufsicht in vergrößerter Darstellung die vordere verriegelte Schloßeinheit;
- Fig. 5: in einer seitlichen Draufsicht die Trägervorrichtung mit dem Verdeckkastendeckel in Schließstellung, wobei die Trägervorrichtung von der Karosserie entriegelt und der Verdeckkastendeckel an der Trägervorrichtung verriegelt ist;
- Fig. 6: in einer perspektivischen Draufsicht in vergrößerter Darstellung die verriegelte Schloßeinheit der Riegeleinrichtung für den Verdeckkastendeckel und die zweite Schloßeinheit der Trägervorrichtung in Offenstellung;

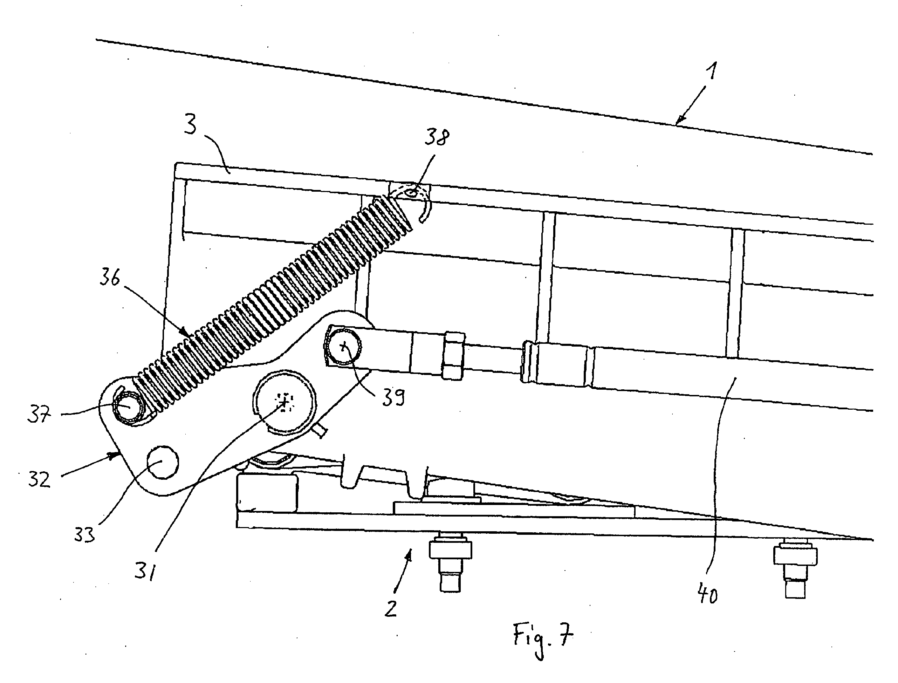

- Fig. 7: in einer seitlichen Draufsicht in vergrößerter Darstellung die erste vordere Schloßeinheit in ihrer Offenstellung; und
- Fig. 8: in einer seitlichen Draufsicht die Trägervorrichtung mit dem Verdeckkastendeckel in einer Zwischenstellung beim Öffnen der Trägervorrichtung, wobei der Verdeckkastendeckel an der Trägervorrichtung verriegelt ist.

Ein Verdeckkastendeckel 1 eines Cabriolet-Fahrzeugs (nicht dargestellt) ist vorderseitig mittels einer jeweiligen Gelenkeinrichtung 2 (nicht näher dargestellt) beidseits an seitlichen vorderen Teilen einer z. B. als Rahmen 3 gebildeten Trägervorrichtung gelagert, wobei der Rahmen 3 vor dem Ablegen des Klapp- oder Faltdaches in einen heckseitigen Verdeckablageraum nach hinten geschwenkt wird, so daß der daran festgelegte Verdeckkastendeckel 1 mit seinem Vorderrand 4 angehoben wird und eine Durchtrittsöffnung für das abzulegende Klapp- oder Faltdach, das insbesondere ein Hardtop-Dach wie auch ein Softtop-Dach sein kann, freigibt. Der Verdeckkastendeckel 1 kann auch als Kofferraumdeckel dienen, indem er aus seiner Schließposition bei an der Karosserie festgelegtem Rahmen 3 mit seinem Hinterrand 5 relativ zum Rahmen 3 bzw. der Karosserie hochgeschwenkt wird und damit eine Beladeöffnung des Kofferraums freigibt. In der DE 44 45 944 C1 ist ein derartiger Verdeckkastendeckel grundsätzlich offenbart, der über einen am Fahrzeugheck um eine karosseriefeste Schwenkachse verschwenkbar gelagerten Hilfsrahmen abgestützt ist.

Der Rahmen 3 des Verdeckkastendeckels 1 ist beidseits an der Karosserie jeweils mittels eines Hauptlenkers 6 und eines Hilfslenkers 7, die ein Viergelenk mit den Gelenken 8 bzw. 9 am Rahmen 3 und den Gelenken 10 bzw. 11 an einer karosseriefesten Lagerplatte 12 bilden, schwenkbar gelagert. Der Rahmen 3 ist z. B. U-förmig und vorne geöffnet entsprechend dem in der DE 44 45 944 C1 offenbarten Hilfsrahmen gestaltet.

Der Hauptlenker 6 weist eine sich über das eine Schwenk- oder Lagerachse bildende Gelenk 10 hinaus erstreckende gekröpfte Verlängerung 13 auf, an der endseitig in einem Gelenk 14 eine Antriebseinheit in Gestalt z. B. einer hydraulischen Kolben-Zylinder-Einheit 15 angelenkt ist. Die Kolben-Zylinder-Einheit 15 stützt sich andererseits an einem Übersetzungshebel 16 in einem Gelenk oder Anlenkpunkt 17 ab, der zwischen der Schwenklagerung 18 des Übersetzungshebels 16 an der Lagerplatte 12 und seinem gegenüberliegenden Ende angeordnet ist, an dem in einem Gelenk 19 eine Verbindungsstange 20 angekoppelt ist. Die Verbindungsstange 20 erstreckt sich aufwärts zu einem Schloßhaken 21 einer hinteren Schloß- oder Riegeleinheit, die den Rahmen 3 in seiner Endstellung oder Schließstellung an der Karosserie bzw. der karosseriefesten Lagerplatte 12 festlegt. Der Schloßhaken 21 ist um eine karosserieseitige Schwenkachse 22 schwenkbar gelagert und hintergreift einen Bolzen 23, der an einem vom Rahmen 3 abwärts ragenden Trägerteil 24 befestigt ist.

Eine Zugfeder 25 ist einerseits an dem Übersetzungshebel 16 nahe dem Gelenk 19 der Verbindungsstange 20 und andererseits an der Lagerplatte 12 befestigt und spannt den Übersetzungshebel 16 und damit die hintere Riegeleinheit in eine Schließstellung vor. Ein karosseriefester Anschlag 26, der z. B. an der Lagerplatte 12 gebildet ist, begrenzt den Schwenkweg des Übersetzungshebels 16 in Öffnungsrichtung entgegen der Kraftrichtung der Zugfeder 25.

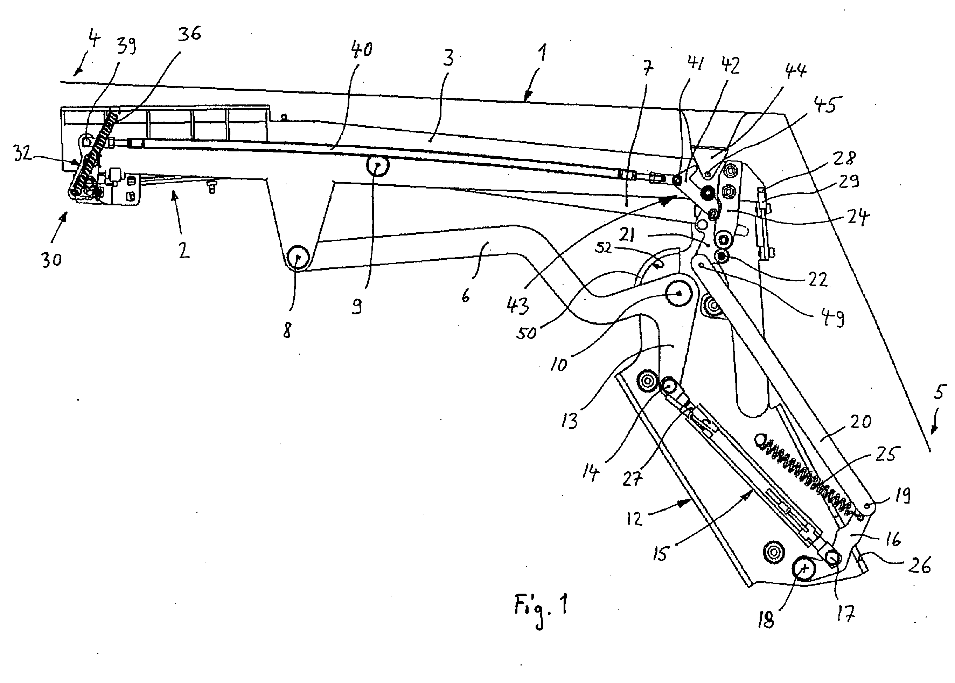

In der Schließstellung des Verdeckkastendeckels 1 und des Rahmens 3 (siehe Fig. 1) ist die Kolben-Zylinder-Einheit 15 bei eingefahrener Kolbenstange 27 drucklos. Die Zugfeder 25 spannt über die Verbindungsstange 20 den Schloßhaken 21 in seine Riegelstellung, in der er den Bolzen 23, der von einer Hülse umgeben sein kann, karosseriefest verriegelt hält. Ein nach unten spitz zulaufendes Führungsteil 28 des Rahmens 3 ist in einer entsprechenden karosserieseitigen Aufnahme 29 zentriert aufgenommen, so daß eine y-z-Abstützung (im x-y-z-Koordinatensystem) des Rahmens 3 gebildet ist, während der Schloßhaken 21 eine x-Abstützung ermöglicht.

Der Rahmen 3 enthält des weiteren an seinem jeweiligen seitlichen Vorderabschnitt eine vordere Riegeleinheit 30 mit einem in einem Gelenk 31 schwenkbar gelagerten Schließteil 32, das einen Riegelbolzen 33 zum Riegeleingriff an einer Riegelkulisse 34 eines karosseriefesten Schloßteils 35 aufweist, wenn der Rahmen 3 in seiner Schließstellung angeordnet ist. Eine Zugfeder 36 ist einerseits an einem am Schließteil 32 im Bereich des Riegelbolzens 33 angebrachten Haltezapfen 37 und andererseits an einem am Rahmen 3 in dem Bereich oberhalb der vorderen Riegeleinheit 30 angebrachten Stift 38 derart angeordnet, daß ihre Federwirklinie (Gerade durch die Befestigungen 37 und 38) bei geschlossenem Schließteil 32 (Fig. 1, 3 und 4) durch die vom Gelenk 31 definierte Schwenkachse des Schließteils 32 verläuft und somit eine Totpunktstellung einnimmt, in der sie keine Verstellkraft auf das Schließteil 32 aufbringt.

Ein einerseits in einem Gelenk 39 am Schließteil 32 angelenktes Verbindungsgestänge 40 ist andererseits in einem Gelenk 41 an einem Schloßhaken 42 einer Verschlußeinheit 43 angelenkt, die im Bereich des Schloßhakens 21 der hinteren Riegeleinheit des Rahmens 3 angeordnet ist und zum Verriegeln des Verdeckkastendeckels 1 vorgesehen ist. Hierfür enthält der Verdeckkastendeckel 1 einen nach unten abstehenden Schloßbügel 44 mit einem Riegelbolzen 45, an dem der um eine Schwenkachse 46 verschwenkbare Schloßhaken 42 in Riegeleingriff bringbar ist.

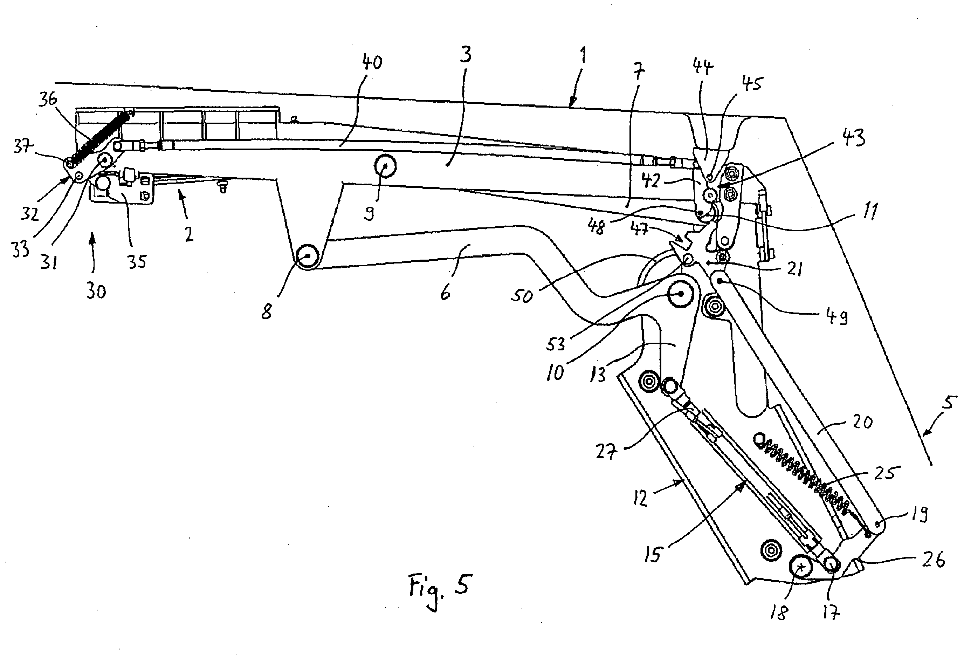

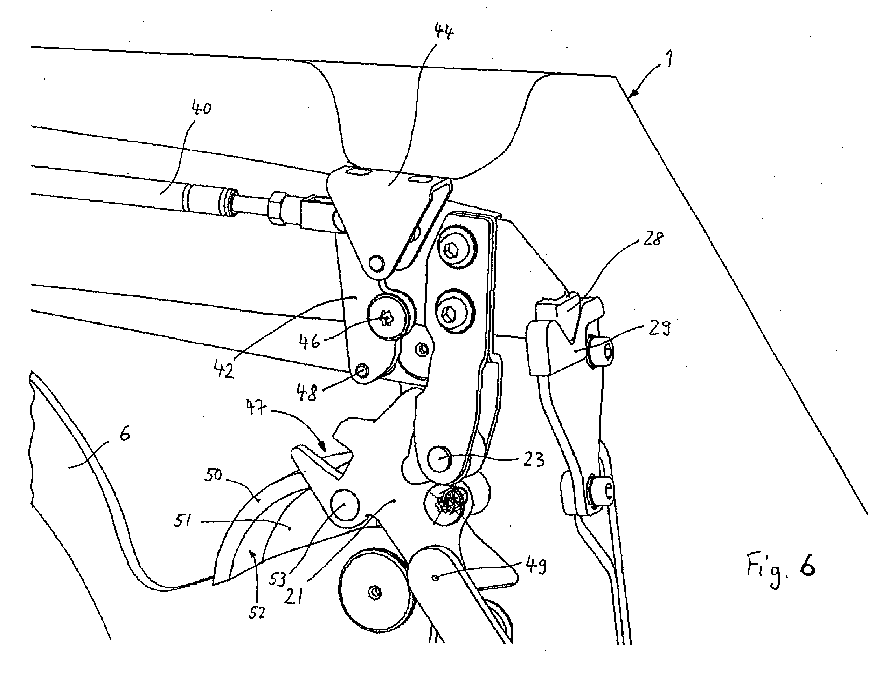

Die Bewegungssteuerung des Schloßhakens 42 und damit der von der vorderen Riegeleinheit 30 und der hinteren Verschlußeinheit 43 gebildeten Kombinationsverriegelung erfolgt durch eine Ausnehmung 47 (siehe z. B. Fig. 5 und 6), die an dem eine Drehfalle bildenden Schloßhaken 21 gebildet ist und beim Verschwenken des geöffneten Schloßhakens 21 in seine Schließstellung einen Bolzen 48 des Schloßhakens 42 aufnimmt und zwangsweise führt, wodurch der Schloßhaken 42 verschwenkt wird.

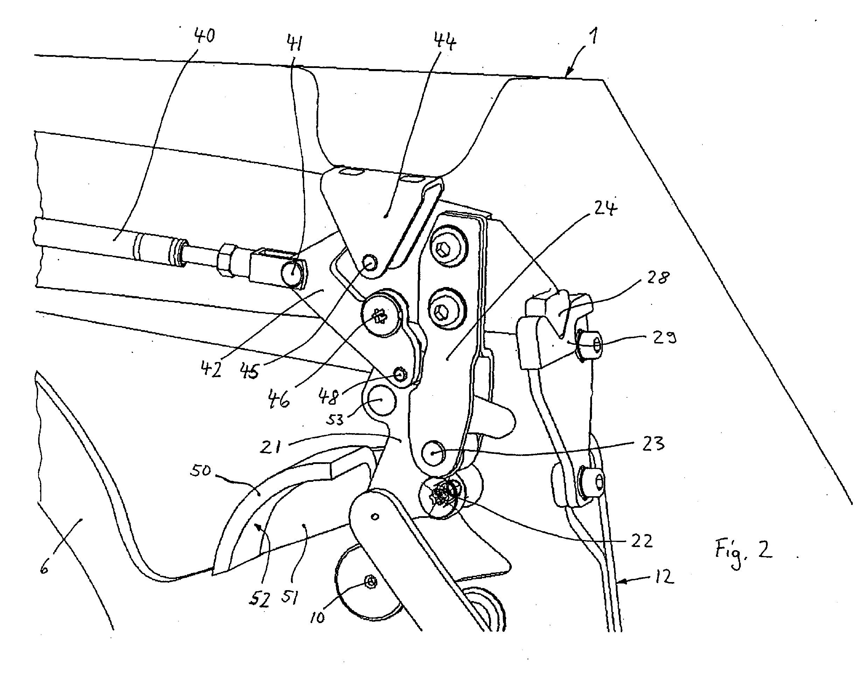

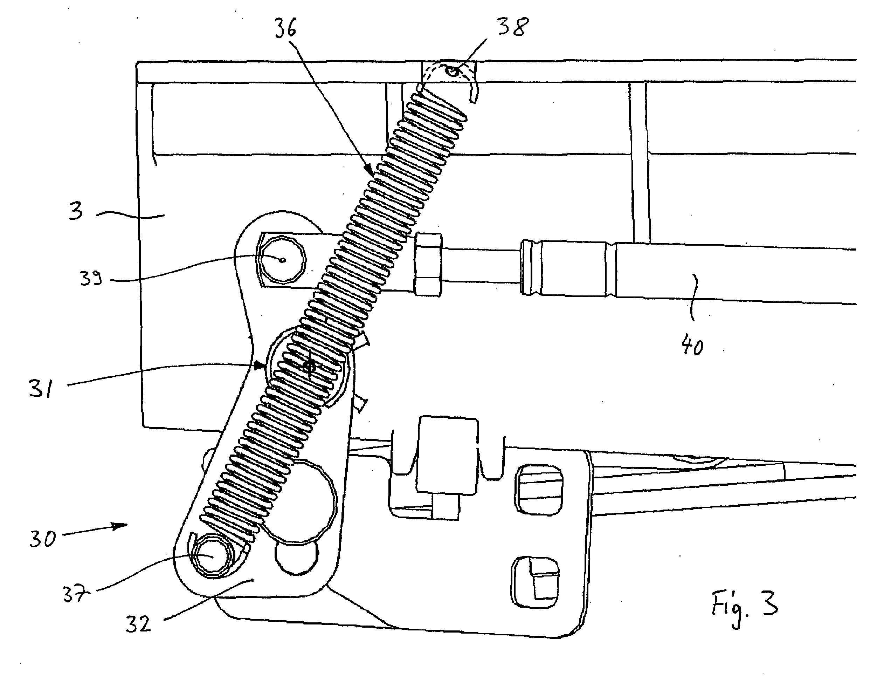

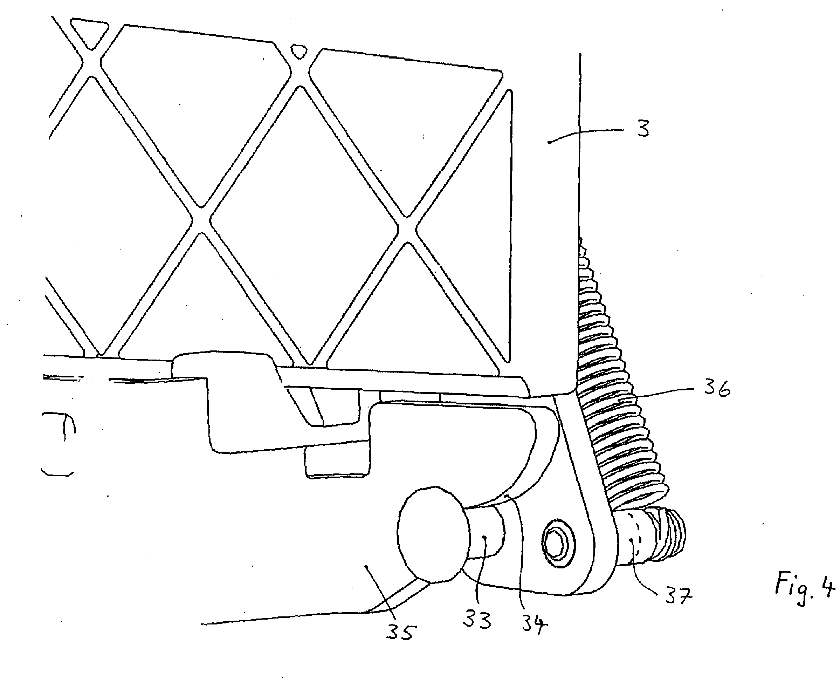

In der in den Fig. 1 und 2 dargestellten Schließstellung des Rahmens 3 und des Verdeckkastendeckels 1 hält die Drehfalle bzw. der Schloßhaken 21 den Verschlußhaken 42 und das damit gekoppelte Schließteil 32 in einer Stellung, in der die vordere Riegeleinheit 30 in ihrer Schließstellung an dem karösseriefesten Schloßteil 35 angeordnet ist (siehe auch Fig. 3 und 4) und somit der Rahmen 3 auch vorne an der Karosserie sicher gehalten ist. Die in Totpunktstellung angeordnete Zugfeder 36 ist kraftneutral hinsichtlich des Schließteils 32 und wirkt damit auch nicht gegen die Zugfeder 25, die das Zylindergehäuse der Kolben-Zylinder-Einheit 15 im drucklosen Zustand positioniert hält.

Der hintere Schloßhaken 42 ist in seiner zurückgeschwenkten Offenstellung angeordnet, in der er den Schloßbügel 44 des Verdeckkastendeckels 1 freigibt. Der Verdeckkastendeckel 1 kann nun in seiner Funktion als Heck- oder Kofferraumdeckel mit seinem Hinterrand 5 hochgeschwenkt werden, wobei zumindest eine zwischengeschaltete Gasdruckfeder (nicht dargestellt) das Hochschwenken unterstützen kann.

Um den Verdeckkastendeckel 1 mit dem Rahmen 3 nach hinten zu schwenken und damit den Weg zum Ein- oder Ausfahren des Verdecks in den Ablageraum bzw. aus im heraus freizugeben, wird die Kolben-Zylinder-Einheit 15 mit Druck beaufschlagt, so daß sie sich durch Ausfahren ihrer Kolbenstange 27 verlängert. Durch die Kolben- oder Expansionskraft wird zunächst der Übersetzungshebel 16 gegen die Kraft der Zugfeder 25 nach unten bis an den Anschlag 26 verschwenkt, da der Hauptlenker 6 aufgrund des Gewichts des Rahmens 3 und des Verdeckkastendeckels 1 eine Gegenkraft an der Kolben-Zylinder-Einheit 15 ausübt, die größer ist als die nötige Stellkraft zum Verschwenken des Übersetzungshebels 16 und der damit gekoppelten Riegeleinrichtung.

Die Kolben-Zylinder-Einheit 15 ist mit ihrem Anlenkpunkt 17 wesentlich näher an der Schwenklagerung 18 des Übersetzungshebels 16 als an dem Gelenk 19 der Verbindungsstange 20 angelenkt, so daß sich entsprechend der vorgenommenen Auslegung z. B. eine 4fache Übersetzung des Bewegungsweges von der Kolben-Zylinder-Einheit 15 zur Verbindungsstange 20 ergibt. Für eine bestimmte Weglänge des Stellweges der Verbindungsstange 20, z. B. für 20 mm, ist somit nur 5 mm Bewegungsweg der Kolben-Zylinder-Einheit 15 erforderlich. Die Übersetzung des Bewegungsweges führt gleichzeitig zu einer entsprechenden Herabsetzung der Betätigungskraft der Kolben-Zylinder-Einheit 15 auf die Verbindungsstange 20 in demselben Maße, wodurch die Bauteile schwächer dimensioniert und damit leichter gebaut sein können. Des weiteren werden bei einer Blockierung der Bewegung des Hauptlenkers 6 oder der Riegeleinheit 21 die hohen Stellkräfte der hydraulischen Kolben-Zylinder-Einheit 15 im Maße des Übersetzungsverhältnisses an der Riegeleinheit reduziert, so daß größere Beschädigungen vermieden werden können.

Ein die Verbindungsstange 20 mit dem Schloßhaken 21 verbindendes Gelenk 49 ist an diesem derart angeordnet, daß aufgrund des Bewegungsweges der Verbindungsstange 20 der Schloßhaken 21 die erforderliche Schwenkbewegung zwischen der Offenstellung und der Schließstellung ausführen kann.

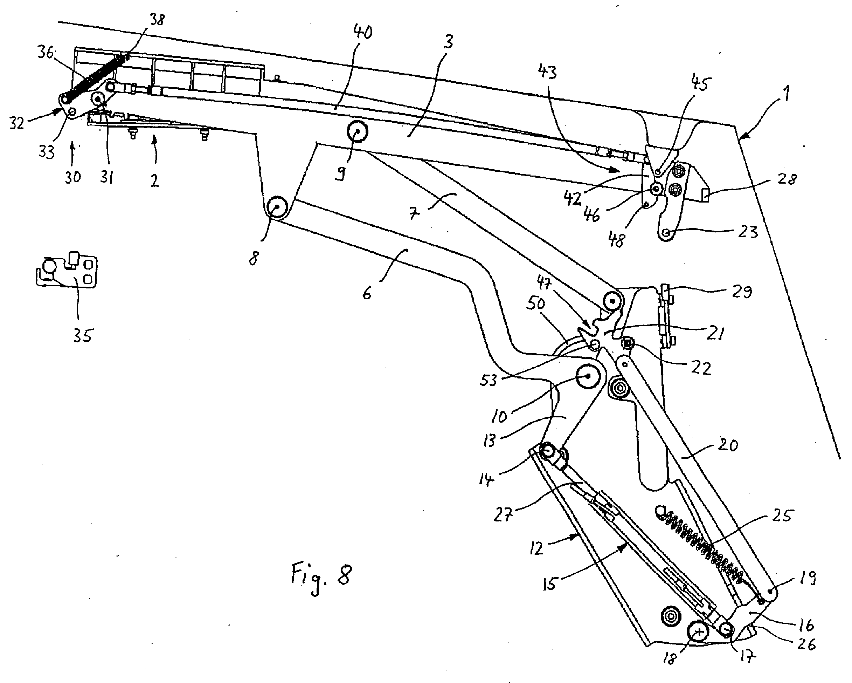

Bei entriegeltem Schloßhaken 21 (siehe Fig. 5) liegt der Übersetzungshebel 16 oder auch ein anderes Bauteil der Riegelkinematik an einem bzw. dem Anschlag 26 an, so daß das weitere Ausfahren der Kolbenstange 27 über das Gelenk 14 den Hauptlenker 6 in Öffnungsrichtung verstellt (Bewegung von der Stellung der Fig. 2 zur Stellung der Fig. 8).

Der in seine Offenstellung verschwenkende Schloßhaken 21 verschwenkt anfänglich über seine Ausnehmung 47 den Bolzen 48 und damit den Schloßhaken 42 in Richtung seiner Schließstellung und über die Kopplung des Verbindungsgestänges 40 das Schließteil 32 der vorderen Riegeleinheit 30 in seine Offenstellung. Beim Verschwenken des Schließteils 32 in seine Offenstellung schwenkt der Haltezapfen 37 die Zugfeder 36 aus ihrer Totpunktstellung in eine aktive Stellung, in der sie (siehe Fig. 5) durch ihre Zugkraft die Öffnungsbewegung des Schließteils 32 und über die Kopplung des Verbindungsgestänges 40 gleichzeitig auch die Schließbewegung des Schloßhakens 42 in ihre Endstellungen bewirkt. Damit ist der Rahmen 3 an seinem Vorderrand zum Anheben freigegeben, während der Verdeckkastendeckel 1 am Rahmen 3 gesichert ist.

Am Hauptlenker 6 ist im Bereich seiner Lagerachse 10 ein zur Lagerachse 10 konzentrisches Ringsegment 50 mittels einer am Hauptlenker 6 fest angebrachten Trägerplatte 51 derart befestigt, daß das Ringsegment 50 mit seiner inneren Abstützbahn 52 in der Stellung der Fig. 5 beginnt, einen vom Schloßhaken 21 seitlich gegen die Lagerplatte 12 hervorstehenden Stützbolzen 53 zu hintergreifen. Durch das eine Blockierkulisse bildende Ringsegment 50 ist der Schloßhaken 21 gegen ein Verschwenken in Schließrichtung blockiert und als Folge davon ist das am Übersetzungshebel 16 gelagerte Ende der Kolben-Zylinder-Einheit 15 mit diesem ortsfest gehalten, auch wenn auf den sich öffnenden Verdeckkastendeckel 1 bzw. Rahmen 3 eine unerwünschte Belastung oder Gegenkraft einwirkt.

Das weitere Ausfahren der Kolbenstange 27 verschwenkt den Hauptlenker 6 über die in Fig. 8 dargestellte Zwischenstellung in seine geöffnete Endstellung, in der der Rahmen 3 mit dem Verdeckkastendeckel 1 nach hinten geschwenkt ist und damit eine Öffnung zum Ein- oder Ausfahren des Verdecks freigegeben ist. Der Übersetzungshebel 16 liegt an dem Anschlag 26 an und der Schloßhaken 21 bietet über seinen Eingriff an dem Ringsegment 50 eine entgegengesetzte Abstützung. Damit ist der untere Anlenkpunkt 17 der Kolben-Zylinder-Einheit 15 ortsfest gehalten. Wenn der Rahmen 3 mit dem Verdeckkastendeckel 1 in der Offenstellung eine Übertotpunktstellung bezüglich seiner Lagerung einnimmt, d. h. wenn sich der Schwerpunkt der Einheit aus Rahmen 3 und Verdeckkastendeckel 1 über die Lagerachse nach hinten bewegt hat und die Einheit z. B. an einer Abstützung anliegt, kann die Kolben-Zylinder-Einheit 15 drucklos geschaltet werden. Die Drucklosschaltung der Kolben-Zylinder-Einheit 15 kann auch in der Schließstellung gemäß Fig. 1 erfolgen. Durch die Zugfeder 25 wird dann die hintere Riegeleinheit und der Schloßhaken 21 in Schließstellung vorgespannt, so daß durch das Gewicht des Zylindergehäuses der Kolben-Zylinder-Einheit 15 der Schloßhaken 21 auch bei Erschütterungen im Fahrbetrieb sich nicht öffnen kann.

Die Verriegelung des Verdeckkastendeckels 1 mittels des Schloßhakens 42 an dem Rahmen 3 verhindert, daß der Verdeckkastendeckel 1 mit seinem Hinterrand 5 aufschwenkt, wenn der nach hinten schwenkende Rahmen 3 die Gelenkeinrichtung 2 des Verdeckkastendeckels 1 anhebt und die wirksame Gewichtskraft des sich dabei schräg stellenden Verdeckkastendeckels 1 als Gegenkraft zu der von der Gasdruckfeder aufgebrachten Öffnungskraft abnimmt.

Das Schließen des Verdeckkastendeckels 1 bzw. des Rahmens 3 erfolgt in entgegengesetztem Bewegungsablauf durch Einfahren der Kolbenstange 27 der Kolben-Zylinder-Einheit 15. Dabei wird beim weiteren Einfahren der Kolbenstange 27 aus der Stellung gemäß Fig. 5 der Übersetzungshebel 16 nach oben (im Gegenuhrzeigersinn gemäß Fig. 5) geschwenkt, sobald der Stützbolzen 53 von der Blockierkulisse bzw. dem Ringsegment 50 freigegeben ist, und der Schloßhaken 21 zieht im Eingriff an dem Bolzen 23 den Rahmen 3 in seine Endstellung, wobei das Führungsteil 28 im Aufnahmeteil 29 zentrisch aufgenommen wird.

Gleichzeitig greift der Schloßhaken 21 mit seiner Ausnehmung 47 den Bolzen 48 des Schloßhakens 42 und verschwenkt diesen in seine Offenstellung (Fig. 1), in der er den Riegelbolzen 45 der Verriegelung des Verdeckkastendeckels 1 öffnet. Der Schloßhaken 42 schwenkt über das Verbindungsgestänge 40 das Schließteil 32 gegen die Kraft der Zugfeder 36 in seine Schließstellung, in der die Zugfeder 36 in ihrer Totpunktstellung angeordnet ist.

**Bezugszeichenliste**

| | | | |
|---|---|---|---|
| 1 | Verdeckkastendeckel | 28 | Führungsteil |
| 2 | Gelenkeinrichtung | 29 | Aufnahme |
| 3 | Rahmen | 30 | vordere Riegeleinheit |
| 4 | Vorderrand | 31 | Gelenk |
| 5 | Hinterrand | 32 | Schließteil |
| 6 | Hauptlenker | 33 | Riegelbolzen |
| 7 | Hilfslenker | 34 | Riegelkulisse |
| 8 | Gelenk | 35 | Schloßteil |
| 9 | Gelenk | 36 | Zugfeder |
| 10 | Gelenk | 37 | Haltezapfen |
| 11 | Gelenk | 38 | Stift |
| 12 | Lagerplatte | 39 | Gelenk |
| 13 | Verlängerung | 40 | Verbindungsgestänge |
| 14 | Gelenk | 41 | Gelenk |
| 15 | Kolben-Zylinder-Einheit | 42 | Schloßhaken |
| 16 | Übersetzungshebel | 43 | Verschlußeinheit |
| 17 | Anlenkpunkt | 44 | Schloßbügel |
| 18 | Schwenklagerung | 45 | Riegelbolzen |
| 19 | Gelenk | 46 | Schwenkachse |
| 20 | Verbindungsstange | 47 | Ausnehmung |
| 21 | Schloßhaken | 48 | Bolzen |
| 22 | Schwenkachse | 49 | Gelenk |
| 23 | Bolzen | 50 | Ringsegment |
| 24 | Trägerteil | 51 | Trägerplatte |
| 25 | Zugfeder | 52 | Abstützbahn |
| 26 | Anschlag | 53 | Stützbolzen |
| 27 | Kolbenstange | | |

## Patentansprüche

1. Trägervorrichtung eines Verdeckkastendeckels eines Cabriolets, die an der Karosserie bewegbar gelagert und mittels einer Riegeleinrichtung an der Karosserie festlegbar ist,
**dadurch gekennzeichnet,**
**daß** die Riegeleinrichtung zwei zur gemeinsamen Betätigung miteinander verbundene und an der Trägervorrichtung angeordnete Schloßeinheiten (30, 43) aufweist, wobei die erste Schloßeinheit (30) zum Festlegen der Trägervorrichtung (3) an der Karosserie und die zweite Schloßeinheit (43) zum Festlegen des an der Trägervorrichtung (3) bewegbar gelagerten Verdeckkastendeckels (1) an der Trägervorrichtung (3) vorgesehen ist.

2. Trägervorrichtung nach Anspruch 1,
**dadurch gekennzeichnet, daß** in einer Schließstellung der Trägervorrichtung (3) die erste Schloßeinheit (30) die Trägervorrichtung (3) an der Karosserie verriegelt und die zweite Schloßeinheit (43) den Verdeckkastendeckel (1) entriegelt.

3. Trägervorrichtung nach Anspruch 1 oder 2,
**dadurch gekennzeichnet, daß** eine Kopplungseinrichtung, insbesondere ein Verbindungsgestänge (40), die beiden Schloßeinheiten (30, 43) miteinander koppelt.

4. Trägervorrichtung nach Anspruch 3,
**dadurch gekennzeichnet, daß** die Kopplungseinrichtung bzw. das Verbindungsgestänge (40) an der Trägervorrichtung (3) angeordnet ist.

5. Trägervorrichtung nach einem der Ansprüche 1 bis 4,
**dadurch gekennzeichnet, daß** eine der beiden Schloßeinheiten (30, 43) durch eine Betätigungseinrichtung (21) bewegungsgesteuert ist.

6. Trägervorrichtung nach Anspruch 5,
**dadurch gekennzeichnet, daß** die Betätigungseinrichtung (21) ein karosserieseitig bewegbar oder schwenkbar gelagertes Antriebsteil (21) und ein Abtriebsteil (42) aufweist, das an der Trägervorrichtung (3) bewegbar oder schwenkbar gelagert ist und an das das Antriebsteil (21) ankoppelbar bzw. von dem das Antriebsteil (21) abkoppelbar ist.

7. Trägervorrichtung nach einem der Ansprüche 1 bis 6,
**dadurch gekennzeichnet, daß** eine der beiden Schloßeinheiten (30, 43) durch eine Kinematik (16, 20, 21) bewegungsgesteuert ist, die mit einer Antriebseinrichtung (15) der Trägervorrichtung (3) gekoppelt ist.

8. Trägervorrichtung nach einem der Ansprüche 1 bis 7,
**dadurch gekennzeichnet, daß** eine Vorspanneinrichtung (36) an zumindest einer der beiden Schloßeinheiten (30, 43) angreift und das vordere Schließteil (32) in Offenstellung und den hinteren Schloßhaken (42) in Schließstellung vorspannt.

9. Trägervorrichtung nach Anspruch 8,
**dadurch gekennzeichnet, daß** die Vorspanneinrichtung (36) in Schließstellung des vorderen Schließteils (32) kraftneutral ist.

10. Trägervorrichtung nach Anspruch 8 oder 9,
**dadurch gekennzeichnet, daß** die Vorspanneinrichtung eine Zugfeder (36) enthält, die das Schließteil (32) mit der Trägervorrichtung (3) derart verbindet, daß ihre Kraftwirklinie bei geschlossenem Schließteil (32) zu diesem in einer Totpunktstellung ist.

11. Trägervorrichtung nach einem der Ansprüche 1 bis 10,
**dadurch gekennzeichnet, daß** eine weitere Riegeleinheit (21) zum Verriegeln der Trägervorrichtung (3) an der Karosserie vorgesehen ist.

12. Trägervorrichtung nach Anspruch 11,
**dadurch gekennzeichnet, daß** die Riegeleinheit (21) in Schließrichtung vorgespannt ist.

13. Trägervorrichtung nach Anspruch 11 oder 12,
**dadurch gekennzeichnet, daß** die Riegeleinheit (21) durch eine Feder (25) vorgespannt ist, die am Übersetzungshebel (16) oder einem weiteren Bauteil der Riegeleinheit, insbesondere einer Verbindungsstange (20), angreift.

14. Trägervorrichtung nach einem der Ansprüche 11 bis 13,
**dadurch gekennzeichnet, daß** die Betätigungseinrichtung der Schloßeinheiten (30, 43) die Riegeleinheit (21) enthält bzw. von dieser gebildet ist.

15. Trägervorrichtung nach Anspruch 14,
**dadurch gekennzeichnet, daß** die Betätigungseinrichtung der Schloßeinheiten (30, 43) an die Schloßeinheiten (30, 43) an- und abkoppelbar ist.

16. Trägervorrichtung nach einem der Ansprüche 1 bis 15,
**dadurch gekennzeichnet, daß** riegelseitig zumindest ein fahrzeugfester Anschlag (26) in einer der Bewegungsrichtungen einer Antriebsvorrichtung (15) der Trägervorrichtung (3) vorgesehen ist.

17. Trägervorrichtung nach Anspruch 16,
**dadurch gekennzeichnet, daß** eine Sperreinrichtung (50, 53) vorgesehen ist, die eine Rückbewegung der Antriebsvorrichtung (15) der Trägervorrichtung (3) verhindert, wenn diese in Richtung ihrer zweiten Endstellung bewegt ist.

18. Trägervorrichtung nach Anspruch 17,
**dadurch gekennzeichnet, daß** die Sperreinrichtung (50, 53) mit der Lagereinrichtung (6) der Trägervorrichtung (3) zusammenwirkt und insbesondere von dieser aktiviert wird.

19. Trägervorrichtung nach Anspruch 17 oder 18,
**dadurch gekennzeichnet, daß** die Sperreinrichtung ein an der Riegeleinheit (21) und insbesondere an einem Schloßhaken der Riegeleinheit angeordnetes Sperrglied (53) aufweist, das mit einem an der Lagereinrichtung (6) der Trägervorrichtung (3) angeordneten Blockierteil (50) in Sperreingriff bringbar ist.

20. Trägervorrichtung nach einem der Ansprüche 1 bis 19,
**dadurch gekennzeichnet, daß** die Trägervorrichtung (3) mittels eines Hauptlenkers (6), insbesondere in Viergelenkanordnung, fahrzeugseitig abgestützt ist.

21. Trägervorrichtung nach einem der Ansprüche 1 bis 20,
**dadurch gekennzeichnet, daß** ein Schloßhaken (21) der Riegeleinheit die Trägervorrichtung (3) in Schließstellung in eine fahrzeugfeste y-z-Abstützung (28, 29) zieht.

22. Trägervorrichtung nach einem der Ansprüche 1 bis 21,
**dadurch gekennzeichnet, daß** die Trägervorrichtung ein Rahmen (3) ist, der über eine Gelenkeinrichtung, insbesondere ein Vier- oder Mehrgelenk (8, 9, 10, 11), an der Karosserie bewegbar abgestützt ist und an dem ein Verdeckkastendeckel (1) schwenkbar gelagert ist.

23. Trägervorrichtung nach einem der Ansprüche 16 bis 22,
**dadurch gekennzeichnet, daß** die Antriebsvorrichtung eine lineare Verstelleinheit und insbesondere eine hydraulische Kolben-Zylinder-Einheit (15) ist.

## Claims

1. Supporting device for a convertible top compartment cover of a convertible, which supporting device is mounted movably on the vehicle body and can be fixed on the vehicle body by means of a locking device,
**characterized in that** the locking device has two lock units (30, 43) which are connected to each other for common actuation and are arranged on the supporting device, the first lock unit (30) being provided for fixing the supporting device (3) to the vehicle body and the second lock unit (43) being provided for fixing the convertible top compartment cover (1) - which is mounted movably on the supporting device (3) - to the supporting device (3).

2. Supporting device according to Claim 1, **characterized in that**, in a closed position of the supporting device (3), the first lock unit (30) locks the supporting device (3) to the vehicle body and the second lock unit (43) unlocks the convertible top compartment cover (1).

3. Supporting device according to Claim 1 or 2, **characterized in that** a coupling device, in particular a connecting linkage (40), couples the two lock units (30, 43) to each other.

4. Supporting device according to Claim 3, **characterized in that** the coupling device or the connecting linkage (40) is arranged on the supporting device (3).

5. Supporting device according to one of Claims 1 to 4, **characterized in that** one of the two lock units (30, 43) has its movement controlled by an actuating device (21).

6. Supporting device according to Claim 5, **characterized in that** the actuating device (21) has a driving part (21), which is mounted movably or pivotably on the vehicle body, and a driven part (42) which is mounted movably or pivotably on the supporting device (3) and to which the driving part (21) can be coupled or from which the driving part (21) can be decoupled.

7. Supporting device according to one of Claims 1 to 6, **characterized in that** one of the two lock units (30, 43) has its movement controlled by a kinematic mechanism (16, 20, 21) which is coupled to a driving device (15) of the supporting device (3).

8. Supporting device according to one of Claims 1 to 7, **characterized in that** a prestressing device (36) acts on at least one of the two lock units (30, 43) and prestresses the front closing part (32) into the open position and the rear lock hook (42) into the closed position.

9. Supporting device according to Claim 8, **characterized in that** the prestressing device (36) is neutral in terms of force in the closed position of the front closing part (32).

10. Supporting device according to Claim 8 or 9, **characterized in that** the prestressing device contains a tension spring (36) which connects the closing part (32) to the supporting device (3) in such a manner that its force action line is in a dead center position with respect to the closing part (32) when the latter is closed.

11. Supporting device according to one of Claims 1 to 10, **characterized in that** a further locking unit (21) is provided for locking the supporting device (3) to the vehicle body.

12. Supporting device according to Claim 11, **characterized in that** the locking unit (21) is prestressed in the closing direction.

13. Supporting device according to Claim 11 or 12, **characterized in that** the locking unit (21) is prestressed by a spring (25) which acts on the transmission lever (16) or on a further component of the locking unit, in particular a connecting rod (20).

14. Supporting device according to one of Claims 11 to 13, **characterized in that** the actuating device of the lock units (30, 43) contains the locking unit (21) or is formed by the latter.

15. Supporting device according to Claim 14, **characterized in that** the actuating device of the lock units (30, 43) can be coupled to and decoupled from the lock units (30, 43).

16. Supporting device according to one of Claims 1 to 15, **characterized in that**, on the locking side, at least one stop (26) which is fixed on the vehicle is provided in one of the directions of movement of a driving device (15) of the supporting device (3).

17. Supporting device according to Claim 16, **characterized in that** a blocking device (50, 53) is provided which prevents the driving device (15) of the supporting device (3) from moving back if it is moved in the direction of its second end position.

18. Supporting device according to Claim 17, **characterized in that** the blocking device (50, 53) interacts with the bearing device (6) of the supporting device (3) and, in particular, is activated by it.

19. Supporting device according to Claim 17 or 18, **characterized in that** the blocking device has a blocking element (53) which is arranged on the locking unit (21) and, in particular, on a lock hook of the locking unit and can be brought into blocking engagement with a blocking part (50) arranged on the bearing device (6) of the supporting device (3).

20. Supporting device according to one of Claims 1 to 19, **characterized in that** the supporting device (3) is supported on the vehicle by means of a main link (6), in particular in a four-joint arrangement.

21. Supporting device according to one of Claims 1 to 20, **characterized in that** a lock hook (21) of the locking unit draws the supporting device (3) in the closed position into a y-z support (28, 29) fixed on the vehicle.

22. Supporting device according to one of Claims 1 to 21, **characterized in that** the supporting device is a frame (3) which is supported movably on the vehicle body via an articulation device, in particular a four-or multi-joint mechanism (8, 9, 10, 11), and on which a convertible top compartment cover (1) is pivotably mounted.

23. Supporting device according to one of Claims 16 to 22, **characterized in that** the driving device is a linear adjustment unit and, in particular, is a hydraulic piston/cylinder unit (15).

## Revendications

1. Dispositif de support pour un couvercle de logement de capote d'une voiture décapotable, lequel dispositif de support est monté mobile sur la carrosserie et peut être fixé à la carrosserie au moyen d'un dispositif de verrouillage,
**caractérisé en ce que**
le dispositif de verrouillage comprend deux unités de verrou (30, 43) reliées l'une à l'autre en vue d'un actionnement commun et disposées sur le dispositif de support, la première unité de verrou (30) étant prévue pour fixer le dispositif de support (3) à la carrosserie et la deuxième unité de verrou (43) étant prévue pour fixer au dispositif de support (3) le couvercle de logement de capote (1) monté mobile sur le dispositif de support (3).

2. Dispositif de support selon la revendication 1,
**caractérisé en ce que**, dans une position de fermeture du dispositif de support (3), la première unité de verrou (30) verrouille le dispositif de support (3) sur la carrosserie et la deuxième unité de verrou (43) déverrouille le couvercle de logement de capote (1).

3. Dispositif de support selon la revendication 1 ou 2,
**caractérisé en ce qu'**un dispositif d'accouplement, en particulier une tringlerie de liaison (40), accouple les deux unités de verrou (30, 43) l'une à l'autre.

4. Dispositif de support selon la revendication 3,
**caractérisé en ce que** le dispositif d'accouplement ou la tringlerie de liaison (40) est disposé(e) sur le dispositif de support (3).

5. Dispositif de support selon l'une quelconque des revendications 1 à 4,
**caractérisé en ce qu'**un dispositif d'actionnement (21) commande le déplacement de l'une des deux unités de verrou (30, 43).

6. Dispositif de support selon la revendication 5,
**caractérisé en ce que** le dispositif d'actionnement (21) comprend une partie d'entraînement (21) montée mobile ou pivotante du côté de la carrosserie et une partie entraînée (42) qui est montée mobile ou pivotante sur le dispositif de support (3) et qui peut être accouplée à la partie d'entraînement (21) ou désaccouplée de cette dernière.

7. Dispositif de support selon l'une quelconque des revendications 1 à 6,
**caractérisé en ce qu'**un mécanisme cinématique (16, 20, 21) commande le déplacement de l'une des deux unités de verrou (30, 43), lequel mécanisme cinématique est accouplé à un dispositif d'entraînement (15) du dispositif de support (3).

8. Dispositif de support selon l'une quelconque des revendications 1 à 7,
**caractérisé en ce qu'**un dispositif de précontrainte (36) agit sur au moins l'une des deux unités de verrou (30, 43) et précontraint la partie de fermeture avant (32) dans la position d'ouverture et le crochet de verrou arrière (42) dans la position de fermeture.

9. Dispositif de support selon la revendication 8,
**caractérisé en ce que** le dispositif de précontrainte (36) est neutre en termes de force dans la position de fermeture de la partie de fermeture avant (32).

10. Dispositif de support selon la revendication 8 ou 9,
**caractérisé en ce que** le dispositif de précontrainte comporte un ressort de traction (36) qui relie la partie de fermeture (32) au dispositif de support (3) de telle sorte que sa ligne d'action de force soit dans une position de point mort par rapport à la partie de fermeture (32) lorsque cette dernière est fermée.

11. Dispositif de support selon l'une quelconque des revendications 1 à 10,
**caractérisé en ce qu'**une unité de verrouillage supplémentaire (21) est prévue pour verrouiller le dispositif de support (3) sur la carrosserie.

12. Dispositif de support selon la revendication 11,
**caractérisé en ce que** l'unité de verrouillage (21) est précontrainte dans la direction de fermeture.

13. Dispositif de support selon la revendication 11 ou 12,
**caractérisé en ce que** l'unité de verrouillage (21) est précontrainte par un ressort (25) qui agit sur le levier de transmission (16) ou sur un autre composant de l'unité de verrouillage, en particulier sur une tige de liaison (20).

14. Dispositif de support selon l'une quelconque des revendications 11 à 13,
**caractérisé en ce que** le dispositif d'actionnement des unités de verrou (30, 43) comporte l'unité de verrouillage (21) ou est formé par celle-ci.

15. Dispositif de support selon la revendication 14,
**caractérisé en ce que** le dispositif d'actionnement des unités de verrou (30, 43) peut être accouplé aux unités de verrou (30, 43) et désaccouplé de celles-ci.

16. Dispositif de support selon l'une quelconque des revendications 1 à 15,
**caractérisé en ce qu'**au moins une butée (26) solidaire du véhicule est prévue, du côté du verrouillage, dans l'une des directions de déplacement d'un dispositif d'entraînement (15) du dispositif de support (3).

17. Dispositif de support selon la revendication 16,
**caractérisé en ce qu'**il est prévu un dispositif de blocage (50, 53) qui empêche un déplacement de retour du dispositif d'entraînement (15) du dispositif de support (3) lorsque celui-ci est déplacé en direction de sa deuxième position d'extrémité.

18. Dispositif de support selon la revendication 17,
**caractérisé en ce que** le dispositif de blocage (50, 53) coopère avec le dispositif de palier (6) du dispositif de support (3) et est en particulier activé par celui-ci.

19. Dispositif de support selon la revendication 17 ou 18,
**caractérisé en ce que** le dispositif de blocage comprend un organe de blocage (53) disposé sur l'unité de verrouillage (21) et en particulier sur un crochet de verrou de l'unité de verrouillage, lequel organe de blocage peut être amené en engagement de blocage avec un partie de blocage (50) disposée sur le dispositif de palier (6) du dispositif de support (3).

20. Dispositif de support selon l'une quelconque des revendications 1 à 19,
**caractérisé en ce que** le dispositif de support (3) est supporté du côté du véhicule au moyen d'un bras principal (6), en particulier dans un agencement à quatre articulations.

21. Dispositif de support selon l'une quelconque des revendications 1 à 20,
**caractérisé en ce qu'**un crochet de verrou (21) de l'unité de verrouillage tire le dispositif de support (3) dans la position de fermeture dans un support y-z (28, 29) solidaire du véhicule.

22. Dispositif de support selon l'une quelconque des revendications 1 à 21,
**caractérisé en ce que** le dispositif de support est un cadre (3) qui est supporté de manière mobile sur la carrosserie par le biais d'un dispositif d'articulation, en particulier d'un quadrilatère articulé ou d'une articulation multiple (8, 9, 10, 11), et sur lequel est monté pivotant un couvercle de logement de capote (1).

23. Dispositif de support selon l'une quelconque des revendications 16 à 22,
**caractérisé en ce que** le dispositif d'entraînement est une unité de déplacement linéaire et en particulier une unité piston-cylindre hydraulique (15).
